# EUROPEAN PATENT SPECIFICATION

(11) **EP 4 085 609 B1**
(45) Date of publication and mention of the grant of the patent: **15.05.2024**
(21) Application number: 20713514.6
(22) Date of filing: 26.02.2020
(51) Int. Cl.: H04N 5/33, H04N 9/43, H04N 1/60, H04N 1/46, H04N 25/13, H04N 1/387, H04N 23/11

(54) **METHOD AND APPARATUS FOR REMOVING ATMOSPHERIC OBSCURANTS FROM IMAGES**
VERFAHREN UND VORRICHTUNG ZUR ENTFERNUNG VON ATMOSPHÄRISCHEN VERDUNKELUNGEN AUS BILDERN
PROCÉDÉ ET DISPOSITIF POUR L'ÉLIMINATION D'OBSCUCISSMENTS ATMOSPHÉRIQUES D'IMAGES

(43) Date of publication of application: 09.11.2022
(73) Proprietor: Huawei Technologies Co., Ltd., Shenzhen, Guangdong 518129, (CN)
(72) Inventor: SAVOLAINEN, Jari, Tuomas, 16440 Kista (SE)
(74) Representative: Gill Jennings & Every LLP
(86) International application number: PCT/EP2020/055049
(87) International publication number: WO 2021/170233

(56) References cited:
- WO-A1-2018/215066
- ZHANG BEI ET AL: "Local color transfer based on dark-channel dehazing for visible/infrared image fusion", VISUAL INFORMATION PROCESSING XX, SPIE, 1000 20TH ST. BELLINGHAM WA 98225-6705 USA, vol. 8056, no. 1, 13 May 2011 (2011-05-13) , pages 1-7, XP060014401, DOI: 10.1117/12.886685 [retrieved on 1901-01-01]
- SOUMYA T ET AL: "Day color transfer based night video enhancement for surveillance system", 2015 IEEE INTERNATIONAL CONFERENCE ON SIGNAL PROCESSING, INFORMATICS, COMMUNICATION AND ENERGY SYSTEMS (SPICES), IEEE, 19 February 2015 (2015-02-19), pages 1-5, XP032765396, DOI: 10.1109/SPICES.2015.7091556 [retrieved on 2015-04-21]
- LIMMER MATTHIAS ET AL: "Infrared Colorization Using Deep Convolutional Neural Networks", 2016 15TH IEEE INTERNATIONAL CONFERENCE ON MACHINE LEARNING AND APPLICATIONS (ICMLA), IEEE, 18 December 2016 (2016-12-18), pages 61-68, XP033055502, DOI: 10.1109/ICMLA.2016.0019 [retrieved on 2017-01-31]

## Description

### TECHNICAL FIELD

The disclosure relates in general to image enhancement, and more specifically to a method and apparatus for removing atmospheric obscurants from digital images using a combination of visible light and infrared imaging.

### BACKGROUND

In various imaging applications, such as public or military imaging applications, it is often desirable to enhance an image acquired by a camera or sensor to reveal additional detail in the image. For example, some particles, vapors and atmospheric obscurants may block and scatter the visible light from far objects. As a result, inside a dense fog the visible light region visibility can be reduced to only few tens of meters, and thus in an image taken with a standard digital camera during such circumstances, people standing in front of a castle may be visible but the castle itself may not be visible at all except for its outlines. A dense fog may also soften the faraway objects in the image and give gray tone to buildings and other objects located further from the camera.

Even though there may exist several good quality images from the same castle, it is important for people to take their own images including family members in the image. If a famous building or statue is not visible in a holiday picture, it is most likely an unwanted situation. In addition to this, people may experience frustration when viewing the captured digital images because a typical human eye may see the same view with much more detail and more vivid colors.

It is therefore desirable to reveal details of such images where some details are obscured or lack color information, without compromising overall image quality.

There exist several software based solutions that could be used for post processing of images to try and sharpen outlines or enhance colors. However, the images for these software based solutions should be stored in raw format which requires huge amount of storage space in the memory of a mobile device or camera. Furthermore, there are certain limitations to what these kind of software based enhancements can do. Typically, one can get for example a mountain slightly more visible behind the fog, but the image will never be sharp if details are missing from the original raw image data. Thus, a castle behind a dense fog will stay blurry even after software based post processing.

Using some additional software based colorizer algorithms, the castle color in the picture might get slightly closer to its original color but the details will be missing. Such algorithms, like neural network-powered algorithms, are quite good at applying color to black and white photos, but often perform poorly for guessing what color any particular item of clothing, inanimate object, or even person should be. The results can be enhanced if a few dots in the image are manually colored, but the results are usually far from perfect.

Accordingly, a need exists for is a method or apparatus for enhancing images by removing atmospheric obscurants which addresses the foregoing limitations of existing image enhancement methods.

ZHANG BEI ET AL: "Local color transfer based on dark-channel dehazing for visible/infrared image fusion", VISUAL INFORMATION PROCESSING XX, SPIE, 1000 20TH ST. BELLINGHAM WA 98225-6705 USA, vol. 8056, no. 1, (2011-05-13), pages 1-7, XP060014401 discloses color transfer involving the dark channel of a reference image and the application of different color transfer schemes to haze area and haze-free area.

### SUMMARY

It is an object to provide an improved method and device for removing atmospheric obscurants from digital images which overcomes or at least reduces the problems mentioned above by using a combination of visible light and infrared imaging.

The foregoing and other objects are achieved by the features of the independent claims. Further implementation forms are apparent from the dependent claims, the description and the figures.

According to a first aspect, there is provided a method for image processing, the method comprising:
obtaining a visible light image portion and an infrared image portion relating to the same scene;
determining a merged image portion relating to the same scene based on the visible light image portion and the infrared image portion, wherein the merged image portion comprises at least a first colored region and a second colorless region; and
determining color information for the second colorless region using a colorization algorithm, based on at least the first colored region, to obtain a final image portion relating to the same scene.

According to this method the quality of digital images taken in challenging, low visibility environmental circumstances such as haze, fog or dust in the air can be improved dramatically using a device such as a mobile smartphone that has, in addition to its normal visible light camera, an infrared camera that can take sharp images despite any atmospheric obscurants. Since the visible light image portion and the infrared image portion originate from the same view point, the image portions can be merged together and the result is sharp final image portion without haze/fog/dust comprising a colored region and a colorless region, wherein any missing colors in the pixels of this colorless region can be filled with an automatic colorizer algorithm using color information from the colored region, thereby resulting in a final colored image portion with enhanced details. In addition, the combination of visible light and infrared image portions can also improve low light imaging and camera based tracking in dark environments.

In a possible implementation form of the first aspect the first colored region is included in the visible light image portion and the second colorless region is included in the infrared image portion, and wherein determining the merged image portion is based on merging the first colored region from the visible light image portion and the second colorless region from the infrared image portion.

In a further possible implementation form of the first aspect the colorization algorithm is an Al-based algorithm that further uses at least one reference image portion relating to the same scene for determining color information for the second colorless region.

Filling the missing colors in the pixels of the second colorless region using an Al-based automatic colorization algorithm that compare the taken image to several images in the internet and social media taken from the exact same location can dramatically improve the color information predictions of the colorization algorithm. In addition, the colorization algorithm only needs a few points with the correct colors to be able to color all missing pixels.

In a further possible implementation form of the first aspect the at least one reference image portion is extracted from an online image database by comparing metadata of the visible light image portion or the infrared image portion to respective metadata of the at least one reference image portion to identify reference image portions relating to the same scene.

In a further possible implementation form of the first aspect the metadata used for identifying reference image portions comprises at least one of a camera location data based on GPS coordinates and cellular network information, camera viewpoint information based on compass, accelerometer or gyroscope data, time and date information, or reference to objects in 3D map databases.

In a further possible implementation form of the first aspect determining the color information further comprises obtaining user input for the colorization algorithm, either by selecting color information based on at least one reference image portion, or selecting the at least one reference image portion from multiple suggested image portions that either relate to the same scene or were taken within a predefined distance from a camera location of the visible light image portion.

In a further possible implementation form of the first aspect the infrared image portion refers to a short-wave infrared, SWIR, image obtained using a SWIR image sensor configured to detect wavelengths beyond the reach of conventional silicon-based imaging sensors, preferably wavelengths between 1050nm - 2500nm, more preferably between 1050nm - 1550nm.

In a further possible implementation form of the first aspect the SWIR image sensor comprises a silicon-based CMOS readout circuit and a conversion layer configured to convert SWIR wavelengths, preferably in the range of 1050nm - 2500nm, to wavelengths that are detectable by a silicon-based image sensor, the conversion layer preferably being a thin-film multilayer stack based on quantum dot materials, with a photoactive layer sensitive in the infrared range.

A SWIR image sensor comprising a conversion layer with a thin-film multilayer stack comprising a photoactive layer that is sensitive in the infrared range, on top of a Silicon readout circuitry (ROIC) creates an IR-sensitive CMOS imager that is compatible with mass manufacturing and can thus can provide an affordable and small sized component that can be used in a smartphone.

In a further possible implementation form of the first aspect the visible light image portion refers to an RGB image obtained using a CMOS image sensor configured to detect wavelengths between 350nm - 1050nm, more preferably between 400nm - 700nm.

In a further possible implementation form of the first aspect determining the merged image portion is further based on an extent of sharpness of the visible light image portion due to visible light scattering.

In a further possible implementation form of the first aspect determining the merged image portion is further based on detecting at least one object of interest in the visible light image portion using an image segmentation algorithm, wherein the at least one object of interest is defined as part of the first colored region.

In a further possible implementation form of the first aspect determining the merged image portion is further based on image depth sensing, wherein foreground objects of the visible light image portion detected within a predefined distance from a reference camera are defined as part of the first colored region.

In a further possible implementation form of the first aspect the image depth sensing is passive depth sensing based on comparing multiple visible light image portions of the same scene taken either as a sequence, or simultaneously using multiple cameras.

In a further possible implementation form of the first aspect the image depth sensing is active depth sensing based on reflected light, such as IR light, detection using a depth sensor.

According to a second aspect, there is provided a computer-based system comprising
a visible light camera configured to obtain a visible light image of a scene;
an infrared camera configured to obtain an infrared image of the same scene; and
a processor coupled to a storage device and configured to extract a visible light image portion from the visible light image and to extract an infrared image portion from the infrared image; wherein
the storage device is configured to store instructions that, when executed by the processor, cause the computer-based system to perform a method according to any one of the possible implementation forms of the first aspect.

Using this system that has, in addition to its normal visible light camera, an infrared camera that can take sharp images despite any atmospheric obscurants, the quality of digital images taken in challenging, low visibility environmental circumstances such as haze, fog or dust in the air can be improved dramatically. Since the visible light image portion and the infrared image portion originate from the same view point, the image portions can be merged together and the result is sharp final image portion without haze/fog/dust comprising a colored region and a colorless region, wherein any missing colors in the pixels of this colorless region can be filled with an automatic colorizer algorithm using color information from the colored region, thereby resulting in a final colored image portion with enhanced details. In addition, the combination of visible light and infrared image portions can also improve low light imaging and camera based tracking in dark environments.

In a possible implementation form of the first aspect the computer-based system is a mobile smartphone comprising a dual-camera system, the dual-camera system comprising the visible light camera and the infrared camera next to each other and arranged with the same orientation, thereby ensuring that the visible light image portion and the infrared image portion originate from the same view point, so that the image portions can be merged together.

According to a third aspect, there is provided a non-transitory computer readable media having stored thereon program instructions that, when executed by a processor, cause the processorto perform the method according to any one of the possible implementation forms of the first aspect.

These and other aspects will be apparent from and the embodiment(s) described below.

### BRIEF DESCRIPTION OF THE DRAWINGS

In the following detailed portion of the present disclosure, the aspects, embodiments and implementations will be explained in more detail with reference to the example embodiments shown in the drawings, in which:
Fig. 1 shows a flow diagram of a method in accordance with one embodiment of the first aspect;
Fig. 2 shows a flow diagram of a method in accordance with another embodiment of the first aspect;
Fig. 3 shows a flow diagram of a method in accordance with another embodiment of the first aspect;
Fig. 4 shows a cross-section of a SWIR image sensor in accordance with another embodiment of the first aspect;
Fig. 5 shows a flow diagram of a method in accordance with another embodiment of the first aspect;
Fig. 6 shows a flow diagram of a method in accordance with another embodiment of the first aspect;
Fig. 7 shows a schematic illustration of a computer-based system in accordance with an embodiment of the second aspect;
Fig. 8 illustrates wavelength sensitivity of a SWIR image sensor in accordance with an embodiment of the first aspect; and
Fig. 9 illustrates sun irradiance and light scattering at different wavelengths.

### DETAILED DESCRIPTION

In the following detailed description, numerous specific details are set forth by way of examples in order to provide a thorough understanding of the relevant disclosure. However, it should be apparent to those skilled in the art that the present disclosure may be practiced without such details. In other instances, well known methods, procedures, systems, components, and/or circuitry have been described at a relatively high-level, without detail, in order to avoid unnecessarily obscuring aspects of the present disclosure.

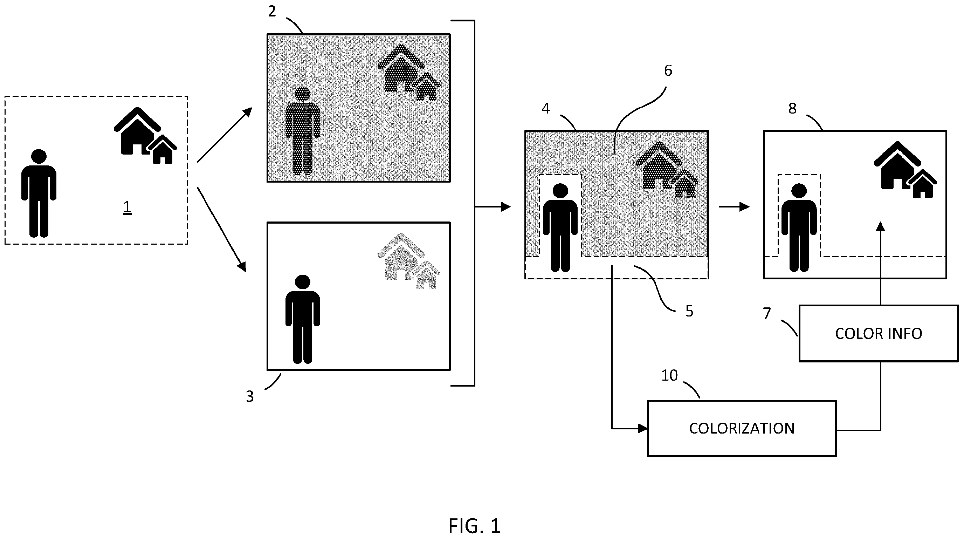

Fig. 1 illustrates the core steps of a method apparatus for removing atmospheric obscurants from a digital image using a combination of visible light and infrared imaging according to the present disclosure.

In a first step, a visible light image portion 2 and an infrared image portion 3 is obtained, both image portions relating to the same scene 1. The visible image portion 2 and the infrared image portion 3 may correspond to a same static scene 1 or a same dynamic scene 1. In some embodiments, the image portions may include a still image, a motion image, a video (offline or live streaming), a frame of a video, or the like, or a combination thereof.

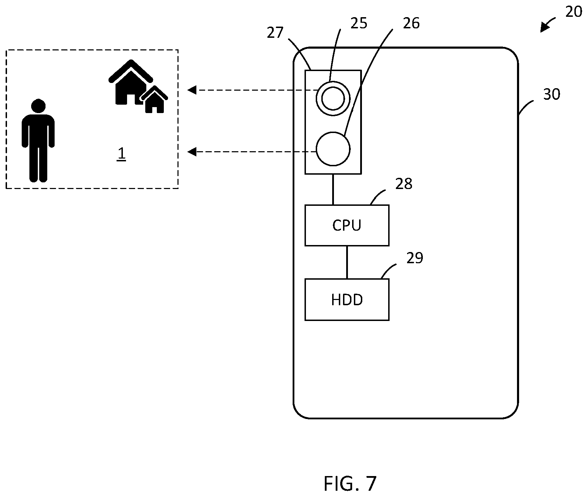

The visible image portion 2 and the infrared image portion 3 may be obtained using a computer-based system, such as the system 20 illustrated in Fig. 7. The system may comprise, as will be explained below in detail, a visible light camera 25 configured to obtain a visible light image of a scene 1 and an infrared camera 26 configured to obtain an infrared image of the same scene 1. A processor 28 may be further configured to extract a visible light image portion 2 from the visible light image and to extract an infrared image portion 3 from the infrared image.

The visible light image portion 2 may in some embodiments refer to an RGB image obtained using a CMOS image sensor 24 that may be implemented as part of a visible light camera 25 and may be configured to detect wavelengths between 350nm - 1050nm, more preferably between 400nm - 700nm.

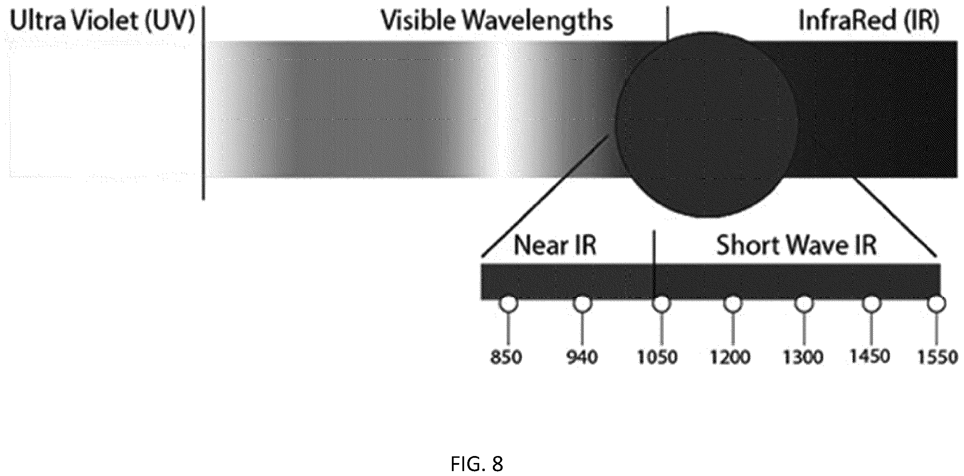

The infrared image portion 3 may in some embodiments refer to a short-wave infrared (SWIR) image obtained using a SWIR image sensor 21 configured to detect wavelengths beyond the reach of conventional silicon-based imaging sensors, preferably wavelengths between 1050nm - 2500nm, more preferably between 1050nm - 1550nm. Fig. 8 illustrates the wavelength sensitivity ranges of such a SWIR image sensor 21.

Generally, visible light images are generated by capturing reflectance of objects included in a scene 1. The reflectance may indicate some details of the objects under a certain luminance. However, under a low luminance or in other circumstances like haze, fog or smoke, such a visible light image may contain noise that may weaken the contrast of the visible light image, or some particles, vapors and atmospheric obscurants may be blocking and scattering the visible light from objects further away from the visible light camera 25, which may decrease the vividness or saturation of colors of these objects.

An infrared image on the other hand is captured based on infrared light reflection. An infrared image may contain less noise under low luminance, and longer light wavelengths can penetrate obscuring layers like haze, fog, or smoke, thereby resulting in a sharper infrared image. In the short wave infrared range (SWIR) in particular, the scattering particles in the air are almost invisible. A SWIR image sensor 21 thus has much less scattering compared to CMOS image sensor 24.

In a following step, the visible light image portion 2 and the infrared image portion 3 are merged to create a merged image portion 4 relating to the same scene 1, wherein this merged image portion 4 comprises at least a first colored region 5 and a second colorless region 6.

In some embodiments, the first colored region 5 may be included in the visible light image portion 2 and the second colorless region 6 may be included in the infrared image portion 3. In a further embodiment, creating the merged image portion 4 is based on merging the first colored region 5 from the visible light image portion 2 and the second colorless region 6 from the infrared image portion 3.

For merging, the visible light image portion 2 and the infrared image portion 3 should ideally have the same aspect ratio and similar field of view. This can be achieved by e.g. locating a visible light camera 25 and an infrared camera 26 in a smartphone 30 next to each other, such as in a dual-camera system 27 comprising the visible light camera 25 and the infrared camera 26 next to each other and arranged with the same orientation as illustrated in Fig. 7.

Having such a dual-camera system 27 operating in different wavelength ranges (RGB and SWIR) provides sharp black and white infrared images in any weather condition and a color visible light images that may have a blurry background in foggy/misty weather. Merging a visible light image portion 2 and an infrared image portion 3 extracted from these images as described above that are taken from the same view point, the result is sharp merged image portion 4 comprising a first colored region 5 with nice colors for the close objects and a second colorless region 6 including background objects, due to the fact that the SWIR image sensor 21 cannot provide colors. The second colorless region 6 may only comprise black and white colors, may be grayscale, or may comprise some additional colors with low saturation.

In a final step, color information 7 for the second colorless region 6 is determined using a colorization algorithm 10, based on at least the first colored region 5, to obtain a final image portion 8 relating to the same scene 1.

The colorization algorithm 10 can be any existing colorization algorithm configured to predict color information 7 for a black and white or grayscale image. Some of these algorithms may include colorizer algorithms that can predict color information 7 without any manual input using Machine Learning based on e.g. Convolutional Neural Networks trained to analyze the colors across a set of color images and their black and white versions. Training data is relatively easy to obtain since any color image can be changed to grayscale, and then paired with its color version to make an easy training example. The algorithms may use several feed-forward passes to ultimately take in a grayscale image and predict ("hallucinate") a plausible (though not necessarily correct) set of colors to fill into the image.

In the method according to the disclosure the work for the colorization algorithm 10 is supported by hints of the colors of the first colored region 5, that may be extracted from the original visible light image portion.

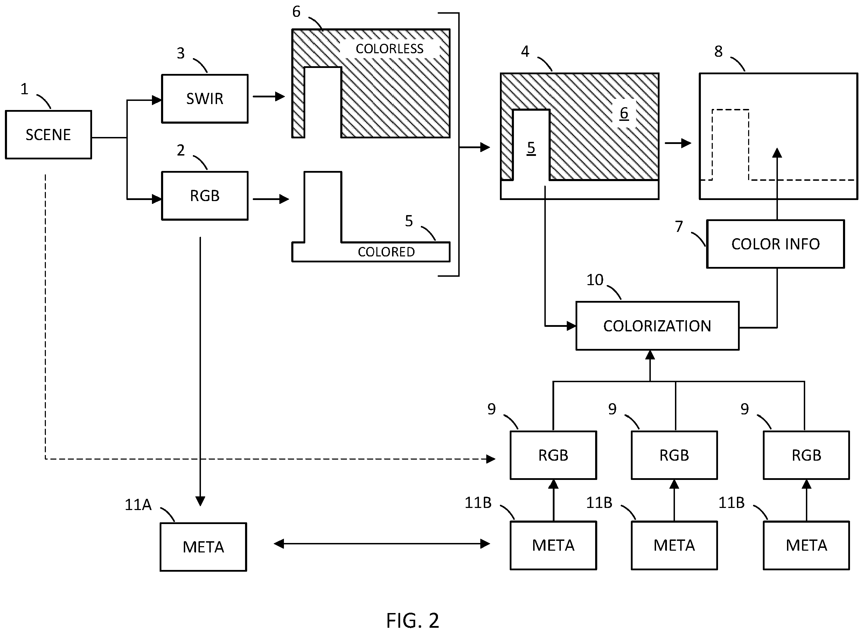

In some embodiments, as illustrated in Figs. 2-3, the colorization algorithm 10 can be further supported by at least one reference image portion 9 relating to the same scene 1 for determining color information 7 for the second colorless region 6. Steps and features that are the same or similar to corresponding steps and features previously described or shown herein are denoted by the same reference numeral as previously used for simplicity.

The internet and different social media platforms are full of images available for use in color prediction that may have been taken from the same (or almost same) view point and thus contain sufficient color information 7 about objects that lack such color information 7 in the second colorless region 6 of the merged image portion 4. The searching for suitable images from internet may be based on the location service provided by for example google or any other service provider. Location services usually use GPS and cellular network data to determine where a certain user is with up to 10m accuracy. A viewpoint data (photo shooting direction) may be provided from a built-in GPS and compass in a mobile device, such as a standard smartphone 30. In addition, computer vision can be used to detect certain known buildings, using e.g. an existing database (such as Google Earth) of 3D maps of major cities. Thus, such a smartphone can provide information on which direction its cameras are pointing when a digital image is taken. For example, if a user is in Central Park New York, it is well known by the system. When a photo is taken towards the San Remo building, it is also known from the phone orientation, and using computer vision comparing famous buildings near Central Park Lake. In some embodiments, the colorization algorithm 10 may further take into account information regarding time of year (foliage) and time of day (brightness, shadows) of when a reference image portion 9 was taken.

In some embodiments, at least one reference image portion 9 is extracted from an online image database as described above by comparing metadata 11A of the visible light image portion 2 or the infrared image portion 3 to respective metadata 11B of the at least one reference image portion 9 to identify reference image portions 9 relating to the same scene 1. Such metadata 11A,11B may comprise, as mentioned above, camera location data based on GPS coordinates and cellular network information, camera viewpoint information based on compass, accelerometer or gyroscope data, time and date information, or reference to objects in 3D map databases.

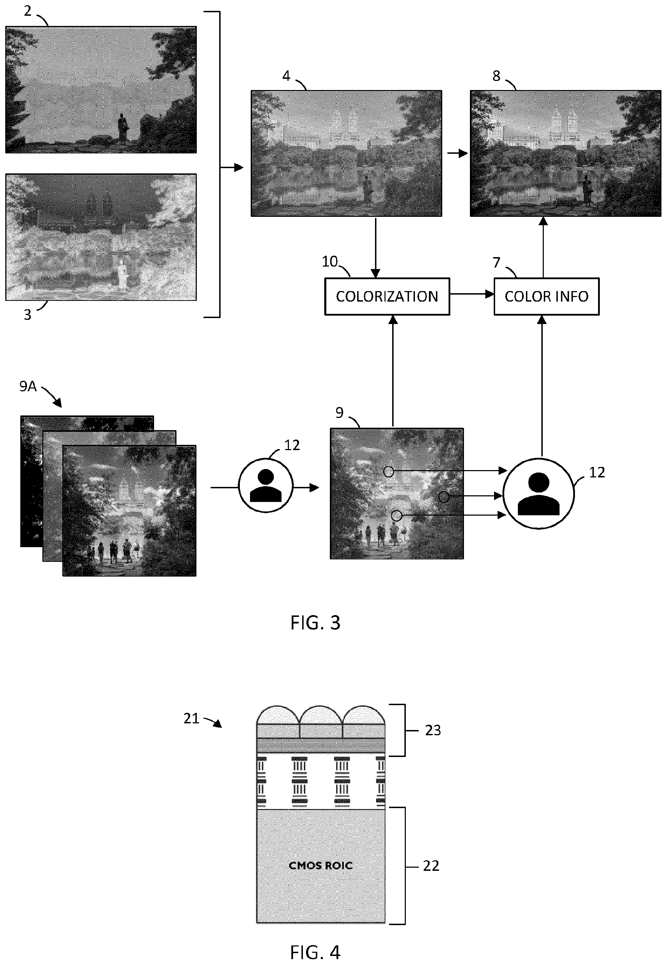

In some embodiments as illustrated in Fig. 3, where the colorization algorithm 10 is supported by reference image portions 9, some of these example references may be manually selected by a user (if no picture from same location/viewpoint is available) via user input 12. The user input 12 may comprise selecting the at least one reference image portion 9 from multiple suggested image portions 9A that either relate to the same scene 1 or were taken within a predefined distance from a camera location of the visible light image portion 2.

In further embodiments color information 7 may be supported or derived from one or more reference image portions 9 using user input 12, wherein the colorization algorithm 10 may need a few points to be indicated by a user to have the correct colors to be able to color all missing pixels in the second colorless region 6.

Fig. 4 illustrates a cross-section of a SWIR image sensor 21 in accordance with the present disclosure. The SWIR image sensor 21 may comprise a silicon-based CMOS readout circuit 22 (CMOS ROIC) and a conversion layer 23 configured to convert SWIR wavelengths, preferably in the range of 1050nm - 2500nm, to wavelengths that are detectable by a silicon-based image sensor, the conversion layer 23 preferably being a thin-film multilayer stack based on quantum dot materials, with a photoactive layer sensitive in the infrared range.

Even though more traditional InGaAs detectors can also detect SWIR range of light, these detectors are typically used in military applications because of the high costs. In addition, InGaAs sensors are under export control in many jurisdictions because they can be easily use for night vision. InGaAs camera modules are also typically bulky and need additional cooling. Therefore, they are impractical or impossible to integrate in smaller sized mobile devices, such as modern smartphones.

A SWIR image sensor that is not based on InGaAs but uses a CMOS ROIC can provide an affordable component for use in a smartphone.

Certain wavelengths (e.g. the 1450nm and 1550nm bands) are particularly important for the development of applications such as computer vision in mobile devices. Yet, due to optical limitations, these wavelengths are normally invisible to Si-based devices. Unfortunately for image-sensor and application developers, silicon photodiodes cannot detect light with wavelengths above one micrometer. The basic silicon material is transparent for photons in this spectrum. Because of these physical limitations, conventional CMOS imagers are blind to SWIR radiation. Using thin-film photodetector (TFPD) technology, an end-to-end solution can be developed that enables Si-based infrared CMOS sensors at the price level of conventional CMOS imagers by providing a thin-film conversion layer 23 integrated monolithically onto silicon-based CMOS image sensors allowing to detect short-wave infrared (SWIR) wavelengths (e.g. the 1450nm and 1550nm bands) above one micrometer.

A SWIR image sensor 21 comprising such a thin-film photodetector pixel stack may be based on quantum dots deposited directly on top of an electronic readout. The stacks can be tuned to target a spectrum from visible light all the way up to 2µm wavelength. The conversion layer 23 with a thin-film multilayer stack comprising a photoactive layer that is sensitive in the infrared range, on top of a Silicon readout circuitry (ROIC) 22, creates an IR-sensitive CMOS imager that is compatible with mass manufacturing.

In some embodiments determining the merged image portion 4 is based on an extent of sharpness of the visible light image portion 2 due to visible light scattering.

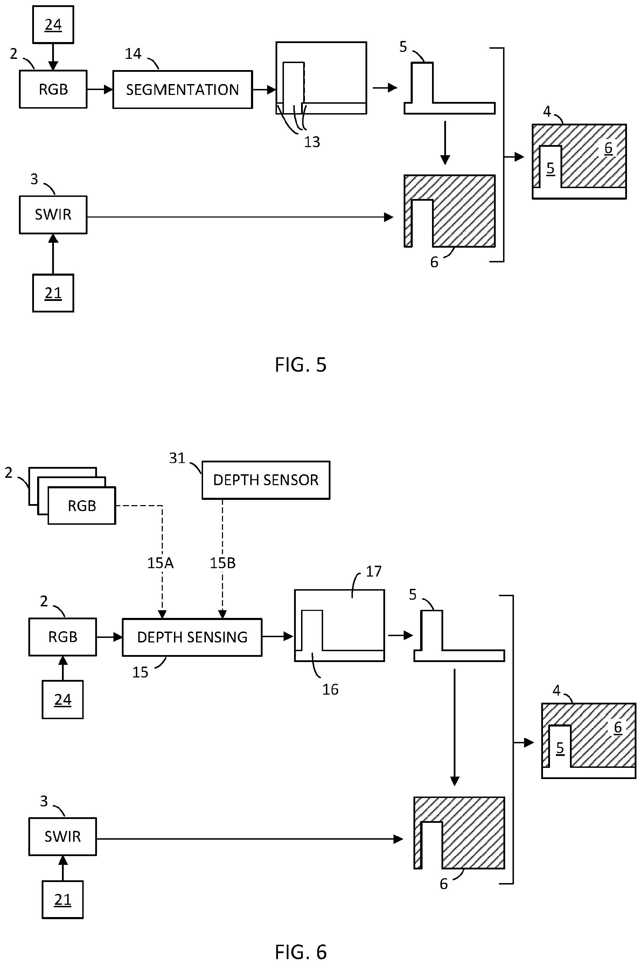

In some embodiments as illustrated in Figs. 5-6, determining the merged image portion 4 is based on image segmentation or depth sensing. Steps and features that are the same or similar to corresponding steps and features previously described or shown herein are denoted by the same reference numeral as previously used for simplicity.

In an embodiment illustrated in Fig. 5, determining the merged image portion 4 is based on detecting at least one object of interest 13 in the visible light image portion 2 using an image segmentation algorithm 14. The at least one object of interest 13 or a combination of these objects of interest 13 are then defined as (part of) the first colored region 5, and the rest of the image portion can be defined as the second colorless region 6 to be merged together to create the merged image portion 4.

In an embodiment illustrated in Fig. 6, determining the merged image portion 4 is based on image depth sensing 15, wherein foreground objects 16 of the visible light image portion 2 detected within a predefined distance from a reference camera are defined as part of the first colored region 5. Using the same method, background objects 17 detected further than a predefined distance from a reference camera can be defined as part of the second colorless region 5, to be merged together to create the merged image portion 4. As an example, close objects such as people or other objects that are sharp may be extracted from the visible light image portion, since it is generally better to use a visible light camera for close-by humans. Further objects that are in the background can then be extracted from the infrared image portion 3, such as mountains, a castle or a city skyline.

In some embodiments, the image depth sensing 15 may be passive depth sensing 15A based on comparing multiple visible light image portions 2 of the same scene 1 taken either as a sequence (such as a moving image or video), or simultaneously using multiple cameras (such as a stereo camera assembly). In some other embodiments, the image depth sensing 15 may be active depth sensing 15B based on reflected light (such as IR light) detection using a depth sensor 31.

Fig. 7 illustrates a computer-based system 20 according to the present disclosure. The system 20 may comprise a visible light camera 25 configured to obtain a visible light image of a scene 1, as well as an infrared camera 26 configured to obtain an infrared image of the same scene 1, and a processor 28 coupled to a storage device 29.

The processor 28 may process images and/or data relating to one or more functions described in the present disclosure. For example, the processor 28 may be configured to extract a visible light image portion 2 from the visible light image and to extract an infrared image portion 3 from the infrared image, and to output processed data to the storage device 29 or to a server via a computer network. In some embodiments, the processor 28 may include a central processing unit (CPU), an application-specific integrated circuit (ASIC), an application-specific instruction-set processor (ASIP), a graphics processing unit (GPU), a physics processing unit (PPU), a digital signal processor (DSP), a field programmable gate array (FPGA), a programmable logic device (PLD), a controller, a microcontroller unit, a reduced instruction-set computer (RISC), a microprocessor, or the like, or any combination thereof.

In some embodiments the processor 28 may be further configured to control a display device of the computer-based system 20 (not shown) to display any of the visible light image portion 2, infrared image portion 3, merged image portion 4 and/or final image portion 8. The display may include a liquid crystal display (LCD), a light emitting diode (LED)-based display, a flat panel display or curved screen, a rollable or flexible display panel, a cathode ray tube (CRT), or a combination thereof.

In some embodiments the processor 28 may be further configured to control an input device (not shown) for receiving a user input 12 regarding suggested image portions 9A for determining a reference image portion 9, or regarding selection of color information 7 as describe above in connection with Figs. 2 and 3.

An input device may be a keyboard, a touch screen, a mouse, a remote controller, a wearable device, or the like, or a combination thereof. The input device may include a keyboard, a touch screen (e.g., with haptics or tactile feedback, etc.), a speech input, an eye tracking input, a brain monitoring system, or any other comparable input mechanism. The input information received through the input device may be communicated to the processor 28 for further processing. Another type of the input device may include a cursor control device, such as a mouse, a trackball, or cursor direction keys to communicate direction information and command selections to, for example, the processor 28 and to control cursor movement on a display device.

The storage device 29 can be configured to store data (such as images, image portions, light signals) directly obtained from the visible light camera 25 and the infrared camera 26, or processed data from the processor 28. In some embodiments, the storage device 29 may store visible light images and/or infrared images received from the respective cameras and/or merged images received from the processor 28 with different formats including, for example, bmp, jpg, png, tiff, gif, pcx, tga, exif, fpx, svg, psd, cdr, pcd, dxf, ufo, eps, ai, raw, WMF, or the like, or any combination thereof. In some embodiments, the storage device 29 may store algorithms to be applied in the processor 28, such as a colorization algorithm 10 or an image segmentation algorithm 14. In some embodiments, the storage device 29 may include a mass storage, a removable storage, a volatile read- and-write memory, a read-only memory (ROM), or the like, or any combination thereof. Exemplary mass storage may include a magnetic disk, an optical disk, a solid-state drive, etc.

The storage device 29 can be further configured to store instructions that, when executed by the processor 28, cause the computer-based system 20 to perform a method as described above for removing atmospheric obscurants from a digital image using a combination of visible light and infrared imaging, according to the present disclosure.

In a preferred embodiment, the computer-based system 20 is a mobile smartphone 30 comprising a dual-camera system 27, the dual-camera system 27 comprising the visible light camera 25 and the infrared camera 26 next to each other and arranged with the same orientation to be able to capture the same scene 1.

Although not illustrated explicitly, the storage device 29 and the processor 28 can also be implemented as part of a server that is in data connection with the mobile smartphone 30 through a network, wherein the mobile smartphone 30 can function as a client device and send image portions such as the visible light image portion 2 and the infrared image portion 3, or the processed merged image portion 4 to the server over the network for colorizing. The server may run the colorization algorithm and determine the missing color information 7 to be sent back to the mobile smartphone 30 to be further processed, or the server may determine final image portion 8 and send it back to the mobile smartphone 30. In some embodiments, the network may be any type of a wired or wireless network, or a combination thereof. Merely by way of example, the network may include a cable network, a wire line network, an optical fiber network, a telecommunication network, an intranet, an Internet, a local area network (LAN), a wide area network (WAN), a wireless local area network (WLAN), a metropolitan area network (MAN), a wide area network (WAN), a public telephone switched network (PSTN), a Bluetooth network, a ZigBee network, a near field communication (NFC) network, or the like, or any combination thereof.

Fig. 8 illustrates wavelength sensitivity of a SWIR image sensor 21 in accordance with the present disclosure.

As described above, CCD and CMOS image sensors 24 are sensitive to visible light covering wavelengths from approximately 350 - 1050nm, although the range is usually given from 400 - 1000nm. Typically, a main visible light camera 25 of a smartphone 30 has an IR filter that cuts the collected light below 700nm. In contrast, the wavelength sensitivity of a SWIR image sensor 21 may ranges between about 1050nm - 1550nm, thereby allowing a dual-camera system 27 comprising a visible light camera 25 and an infrared camera 26 to cover a range of wavelengths from approximately 350 to 1550nm.

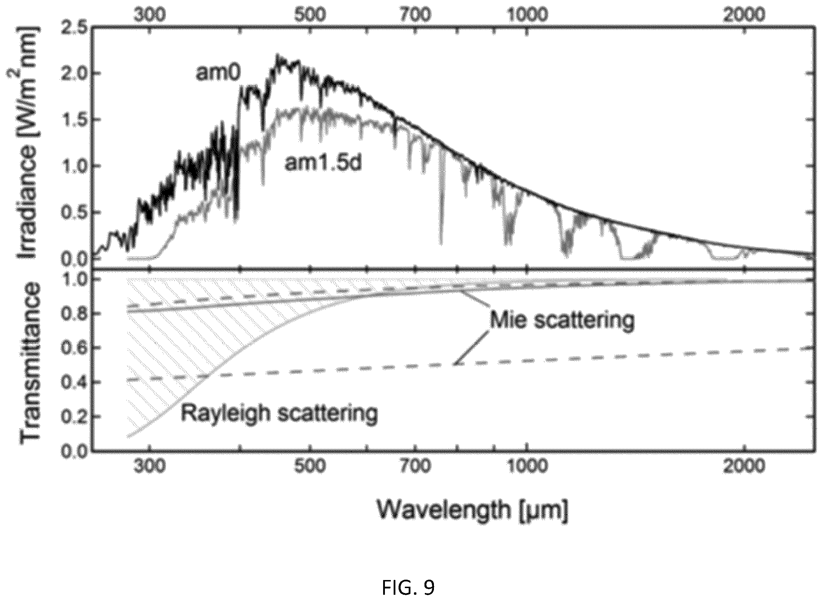

Fig. 9 illustrates sun irradiance and light scattering at different wavelengths. In the short wave infrared range (SWIR) in particular, the scattering particles in the air are almost invisible. A SWIR image sensor 21 thus can have much less scattering compared to CMOS image sensor 24. Small particles (relative to light wavelength) scatter short wavelengths heavily according to the Rayleigh scattering model, while medium particles scatter proportionally to wavelength according to the Mie scattering model. Large particles scatter all wavelengths.

Longer light wavelengths can penetrate obscuring layers like haze, fog, or smoke, thereby resulting in a sharper infrared image, which can be utilized by the methods described above, for removing atmospheric obscurants from a digital image.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims.

A single processor or other unit may fulfill the functions of several items recited in the claims. A computer program may be stored/distributed on a suitable medium, such as an optical storage medium or a solid-state medium supplied together with or as part of other hardware, but may also be distributed in other forms, such as via the Internet or other wired or wireless telecommunication systems.

## Claims

1. A method for image processing, the method comprising:
obtaining a visible light image portion (2) and an infrared image portion (3) relating to the same scene (1);
determining a merged image portion (4) relating to the same scene (1) based on the visible light image portion (2) and the infrared image portion (3), wherein the merged image portion (4) comprises at least a first colored region (5) and a second colorless region (6); and
determining color information (7) for said second colorless region (6) using a colorization algorithm (10), based on at least said first colored region (5), to obtain a final image portion (8) relating to said same scene (1), wherein said colorization algorithm (10) is an Al-based algorithm that further uses at least one reference image portion (9) relating to said same scene (1) for determining color information (7) for said second colorless region (6), wherein said at least one reference image portion (9) is extracted from an online image database by comparing metadata (11A) of said visible light image portion (2) or said infrared image portion (3) to respective metadata (11B) of said at least one reference image portion (9) to identify reference image portions (9) relating to said same scene (1).

2. The method according to claim 1, wherein the first colored region (5) is included in the visible light image portion (2) and the second colorless region (6) is included in the infrared image portion (3), and wherein determining the merged image portion (4) is based on merging the first colored region (5) from the visible light image portion (2) and the second colorless region (6) from the infrared image portion (3).

3. The method according to claim 1, wherein said metadata (11A,11B) used for identifying reference image portions (9) comprises at least one of
- camera location data based on GPS coordinates and cellular network information,
- camera viewpoint information based on compass, accelerometer or gyroscope data,
- time and date information, or
- reference to objects in 3D map databases.

4. The method according to any one of claims 1 to 3, wherein determining said color information (7) further comprises obtaining user input (12) for said colorization algorithm (10), either by
- selecting color information (7) based on at least one reference image portion (9), or
- selecting said at least one reference image portion (9) from multiple suggested image portions (9A) that either relate to said same scene (1) or were taken within a predefined distance from a camera location of said visible light image portion (2).

5. The method according to any one of claims 1 to 4, wherein said infrared image portion (3) refers to a short-wave infrared, SWIR, image obtained using a SWIR image sensor (21) configured to detect wavelengths beyond the reach of conventional silicon-based imaging sensors, preferably wavelengths between 1050nm - 2500nm, more preferably between 1050nm - 1550nm.

6. The method according to claim5, wherein said SWIR image sensor (21) comprises a silicon-based CMOS readout circuit (22) and a conversion layer (23) configured to convert SWIR wavelengths, preferably in the range of 1050nm - 2500nm, to wavelengths that are detectable by a silicon-based image sensor, said conversion layer (23) preferably being a thin-film multilayer stack based on quantum dot materials, with a photoactive layer sensitive in the infrared range.

7. The method according to any one of claims 1 to 6, wherein said visible light image portion (2) refers to an RGB image obtained using a CMOS image sensor (24) configured to detect wavelengths between 350nm - 1050nm, more preferably between 400nm - 700nm.

8. The method according to any one of claims 1 to 7, wherein determining the merged image portion (4) is further based on an extent of sharpness of the visible light image portion (2) due to visible light scattering.

9. The method according to any one of claims 1 to 8, wherein determining the merged image portion (4) is further based on detecting at least one object of interest (13) in said visible light image portion (2) using an image segmentation algorithm (14), wherein said at least one object of interest (13) is defined as part of said first colored region (5).

10. The method according to any one of claims 1 to 9, wherein determining the merged image portion (4) is further based on image depth sensing (15), wherein foreground objects (16) of said visible light image portion (2) detected within a predefined distance from a reference camera are defined as part of said first colored region (5).

11. The method according to claim 10, wherein said image depth sensing (15) is passive depth sensing (15A) based on comparing multiple visible light image portions (2) of the same scene (1) taken either as a sequence, or simultaneously using multiple cameras.

12. A computer-based system (20) comprising
a visible light camera (25) configured to obtain a visible light image of a scene (1);
an infrared camera (26) configured to obtain an infrared image of said same scene (1); and
a processor (28) coupled to a storage device (29) and configured to extract a visible light image portion (2) from said visible light image and to extract an infrared image portion (3) from said infrared image; wherein
said storage device (29) is configured to store instructions that, when executed by said processor (28), cause the computer-based system (20) to perform a method according to any one of claims 1 to 11.

13. The computer-based system (20) according to claim 12, wherein said computer-based system (20) is a mobile smartphone (30) comprising a dual-camera system (27), said dual-camera system (27) comprising said visible light camera (25) and said infrared camera (26) next to each other and arranged with the same orientation.

## Patentansprüche

1. Verfahren zur Bildbearbeitung, wobei das Verfahren Folgendes umfasst:
Erlangen eines Bildabschnitts für sichtbares Licht (2) und eines Infrarotbildabschnitts (3), die sich auf dieselbe Szene (1) beziehen;
Bestimmen eines zusammengeführten Bildabschnitts (4), der sich auf dieselbe Szene (1) bezieht, basierend auf dem Bildabschnitt für sichtbares Licht (2) und dem Infrarotbildabschnitt (3), wobei der zusammengeführte Bildabschnitt (4) mindestens einen ersten farbigen Bereich (5) und einen zweiten farblosen Bereich (6) umfasst; und
Bestimmen von Farbinformationen (7) für den zweiten farblosen Bereich (6) unter Verwendung eines Kolorierungsalgorithmus (10), der auf mindestens dem ersten farbigen Bereich (5) basiert, um einen endgültigen Bildabschnitt (8) zu erlangen, der sich auf dieselbe Szene (1) bezieht, wobei der Kolorierungsalgorithmus (10) ein KI-basierter Algorithmus ist, der ferner mindestens einen Referenzbildabschnitt (9) verwendet, der sich auf dieselbe Szene (1) bezieht, um Farbinformationen (7) für den zweiten farblosen Bereich (6) zu bestimmen, wobei der mindestens eine Referenzbildabschnitt (9) aus einer Online-Bilddatenbank extrahiert wird, indem Metadaten (11A) des Bildabschnitts für sichtbares Licht (2) oder des Infrarotbildabschnitts (3) mit den jeweiligen Metadaten (11B) des mindestens einen Referenzbildabschnitts (9) verglichen werden, um Referenzbildabschnitte (9) zu identifizieren, die sich auf dieselbe Szene (1) beziehen.

2. Verfahren nach Anspruch 1, wobei der erste farbige Bereich (5) im Bildabschnitt für sichtbares Licht (2) beinhaltet ist und der zweite farblose Bereich (6) im Infrarotbildabschnitt (3) beinhaltet ist, und wobei das Bestimmen des zusammengeführten Bildabschnitts (4) auf dem Zusammenführen des ersten farbigen Bereichs (5) aus dem Bildabschnitt für sichtbares Licht (2) und des zweiten farblosen Bereichs (6) aus dem Infrarotabschnitt (3) basiert.

3. Verfahren nach Anspruch 1, wobei die zum Identifizieren von Referenzbildabschnitten (9) verwendeten Metadaten (11A, 11B) mindestens eines von Folgenden umfassen:
- Kamerastandortdaten basierend auf GPS-Koordinaten und Mobilfunknetzinformationen,
- Kamerastandpunktinformationen basierend auf Kompass-, Beschleunigungsmesser- oder Gyroskopdaten,
- Zeit- und Datumsinformationen oder
- Verweis auf Objekte in 30 Kartendatenbanken.

4. Verfahren nach einem der Ansprüche 1 bis 3, wobei das Bestimmen der Farbinformationen (7) ferner Erlangen einer Benutzereingabe (12) für den Kolorierungsalgorithmus (10) umfasst, entweder durch
- Auswählen von Farbinformationen (7) basierend auf mindestens einem Referenzbildabschnitt (9) oder
- Auswählen des mindestens einen Referenzbildabschnitts (9) aus mehreren vorgeschlagenen Bildabschnitten (9A), die sich entweder auf die gleiche Szene (1) beziehen oder innerhalb einer vordefinierten Entfernung von einem Kamerastandort des Bildabschnitts für sichtbares Licht (2) aufgenommen wurden.

5. Verfahren nach einem der Ansprüche 1 bis 4, wobei sich der Infrarotbildabschnitt (3) auf ein Kurzwellen-Infrarotbild (short wave-infrared - SWIR) bezieht, das unter Verwendung eines SWIR-Bildsensors (21) erlangt wurde, der dazu konfiguriert ist, Wellenlängen zu erkennen, die außerhalb der Reichweite herkömmlicher Bildsensoren auf Siliziumbasis liegen, vorzugsweise Wellenlängen zwischen 1050 nm-2500 nm, noch bevorzugter zwischen 1050 nm-1550 nm.

6. Verfahren nach Anspruch 5, wobei der SWIR-Bildsensor (21) eine siliziumbasierte CMOS-Ausleseschaltung (22) und eine Umwandlungsschicht (23) umfasst, die dazu konfiguriert ist, SWIR-Wellenlängen, vorzugsweise im Bereich von 1050 nm-2500 nm, in Wellenlängen umzuwandeln, die durch einen siliziumbasierten Bildsensor erkennbar sind, wobei die Umwandlungsschicht (23) vorzugsweise ein Dünnfilm-Mehrschichtstapel auf Basis von Quantenpunktmaterialien ist, mit einer photoaktiven Schicht, die im Infrarotbereich empfindlich ist.

7. Verfahren nach einem der Ansprüche 1 bis 6, wobei sich der Bildabschnitt für sichtbares Licht (2) auf ein RGB-Bild bezieht, das unter Verwendung eines CMOS-Bildsensors (24) erlangt wird, der dazu konfiguriert ist, Wellenlängen zwischen 350 nm-1050 nm, vorzugsweise zwischen 400 nm-700 nm, zu erkennen.

8. Verfahren nach einem der Ansprüche 1 bis 7, wobei das Bestimmen des zusammengeführten Bildabschnitts (4) ferner auf dem Ausmaß der Schärfe des Bildabschnitts für sichtbares Licht (2) aufgrund von Streuung sichtbaren Lichts basiert.

9. Verfahren nach einem der Ansprüche 1 bis 8, wobei das Bestimmen des zusammengeführten Bildabschnitts (4) ferner auf Erkennen mindestens eines interessierenden Objekts (13) in dem Bildabschnitt für sichtbares Licht (2) unter Verwendung eines Bildsegmentierungsalgorithmus (14) basiert, wobei das mindestens eine interessierende Objekt (13) als Teil des ersten farbigen Bereichs (5) definiert ist.

10. Verfahren nach einem der Ansprüche 1 bis 9, wobei das Bestimmen des zusammengeführten Bildabschnitts (4) ferner auf Bildtiefenerfassung (15) basiert, wobei Vordergrundobjekte (16) des Bildabschnitts für sichtbares Licht (2), die innerhalb einer vordefinierten Entfernung von einer Referenzkamera erkannt werden, als Teil des ersten farbigen Bereichs (5) definiert werden.

11. Verfahren nach Anspruch 10, wobei es sich bei der Bildtiefenerfassung (15) um eine passive Tiefenerfassung (15A) handelt, die auf Vergleichen mehrerer Bildabschnitte für sichtbares Licht (2) derselben Szene (1) basiert, die entweder als Sequenz oder gleichzeitig unter Verwendung mehrerer Kameras aufgenommen wurden.

12. Computerbasiertes System (20), umfassend
eine Kamera für sichtbares Licht (25), die dazu konfiguriert ist, ein Bild einer Szene (1) für sichtbares Licht zu erlangen;
eine Infrarotkamera (26), die dazu konfiguriert ist, ein Infrarotbild derselben Szene (1) zu erlangen; und
einen Prozessor (28), der an eine Speichervorrichtung (29) gekoppelt und dazu konfiguriert ist, einen Bildabschnitt für sichtbares Licht (2) aus dem Bild für sichtbares Licht zu extrahieren und einen Infrarotbildabschnitt (3) aus dem Infrarotbild zu extrahieren; wobei
die Speichervorrichtung (29) dazu konfiguriert ist, Anweisungen zu speichern, die bei Ausführung durch den Prozessor (28) das computerbasierte System (20) dazu veranlassen, ein Verfahren nach einem der Ansprüche 1 bis 11 auszuführen.

13. Computerbasiertes System (20) nach Anspruch 12, wobei das computerbasierte System (20) ein mobiles Smartphone (30) ist, das ein Dual-Kamera-System (27) umfasst, wobei das Dual-Kamera-System (27) die Kamera für sichtbares Licht (25) und die Infrarotkamera (26) nebeneinander und mit derselben Ausrichtung angeordnet umfasst.

## Revendications

1. Procédé de traitement d'image, le procédé comprenant :
l'obtention d'une partie d'image en lumière visible (2) et d'une partie d'image infrarouge (3) concernant la même scène (1) ;
la détermination d'une partie d'image fusionnée (4) concernant la même scène (1) sur la base de la partie d'image en lumière visible (2) et de la partie d'image infrarouge (3), dans lequel la partie d'image fusionnée (4) comprend au moins une première région colorée (5) et une seconde région incolore (6) ; et
la détermination d'informations de couleur (7) pour ladite seconde région incolore (6) à l'aide d'un algorithme de colorisation (10), sur la base d'au moins ladite première région colorée (5), pour obtenir une partie d'image finale (8) concernant ladite même scène (1), dans lequel ledit algorithme de colorisation (10) est un algorithme basé sur l'IA qui utilise en outre au moins une partie d'image de référence (9) concernant ladite même scène (1) pour déterminer des informations de couleur (7) pour ladite seconde région incolore (6), dans lequel ladite au moins une partie d'image de référence (9) est extraite d'une base de données d'images en ligne en comparant des métadonnées (11A) de ladite partie d'image en lumière visible (2) ou de ladite partie d'image infrarouge (3) aux métadonnées respectives (11B) de ladite au moins une partie d'image de référence (9) pour identifier des parties d'image de référence (9) concernant ladite même scène (1) .

2. Procédé selon la revendication 1, dans lequel la première région colorée (5) est incluse dans la partie d'image en lumière visible (2) et la seconde région incolore (6) est incluse dans la partie d'image infrarouge (3), et dans lequel la détermination de la partie d'image fusionnée (4) est basée sur la fusion de la première région colorée (5) de la partie d'image en lumière visible (2) et de la seconde région incolore (6) de la partie d'image infrarouge (3).

3. Procédé selon la revendication 1, dans lequel lesdites métadonnées (11A, 11B) utilisées pour identifier des parties d'image de référence (9) comprennent au moins l'une
- de données de localisation de caméra sur la base des coordonnées GPS et des informations de réseau cellulaire,
- d'informations sur le point de vue de la caméra sur la base des données d'une boussole, d'un accéléromètre ou d'un gyroscope,
- d'informations sur l'heure et la date, ou
- d'une référence à des objets dans 30 bases de données cartographiques.

4. Procédé selon l'une quelconque des revendications 1 à 3, dans lequel la détermination desdites informations de couleur (7) comprend en outre l'obtention d'une entrée utilisateur (12) pour ledit algorithme de colorisation (10), soit
- en sélectionnant des informations de couleur (7) sur la base d'au moins une partie d'image de référence (9), ou
- en sélectionnant ladite au moins une partie d'image de référence (9) parmi de multiples parties d'image suggérées (9A) qui soit se rapportent à ladite même scène (1) soit ont été prises à une distance prédéfinie d'un emplacement de caméra de ladite partie d'image en lumière visible (2).

5. Procédé selon l'une quelconque des revendications 1 à 4, dans lequel ladite partie d'image infrarouge (3) fait référence à une image infrarouge à ondes courtes, SWIR, obtenue à l'aide d'un capteur d'image SWIR (21) configuré pour détecter des longueurs d'onde hors de portée de capteurs d'imagerie conventionnels à base de silicium, de préférence des longueurs d'onde comprises entre 1050 nm et 2500 nm, plus préférablement entre 1050 nm et 1550 nm.

6. Procédé selon la revendication 5, dans lequel ledit capteur d'image SWIR (21) comprend un circuit de lecture CMOS à base de silicium (22) et une couche de conversion (23) configurée pour convertir des longueurs d'onde SWIR, de préférence dans la plage de 1050 nm et 2500 nm, à des longueurs d'onde détectables par un capteur d'image à base de silicium, ladite couche de conversion (23) étant de préférence un empilement multicouche en couches minces à base de matériaux à points quantiques, avec une couche photoactive sensible dans le domaine infrarouge.

7. Procédé selon l'une quelconque des revendications 1 à 6, dans lequel ladite partie d'image en lumière visible (2) fait référence à une image RVB obtenue à l'aide d'un capteur d'image CMOS (24) configuré pour détecter des longueurs d'onde comprises entre 350 nm et 1050 nm, plus préférablement entre 400 nm et 700 nm.

8. Procédé selon l'une quelconque des revendications 1 à 7, dans lequel la détermination de la partie d'image fusionnée (4) est en outre basée sur une étendue de netteté de la partie d'image en lumière visible (2) due à la diffusion de la lumière visible.

9. Procédé selon l'une quelconque des revendications 1 à 8, dans lequel la détermination de la partie d'image fusionnée (4) est en outre basée sur la détection d'au moins un objet d'intérêt (13) dans ladite partie d'image en lumière visible (2) à l'aide d'un algorithme de segmentation d'image (14), dans lequel ledit au moins un objet d'intérêt (13) est défini comme faisant partie de ladite première région colorée (5).

10. Procédé selon l'une quelconque des revendications 1 à 9, dans lequel la détermination de la partie d'image fusionnée (4) est en outre basée sur une détection de profondeur d'image (15), dans lequel des objets de premier plan (16) de ladite partie d'image en lumière visible (2) détectés dans une distance prédéfinie par rapport à une caméra de référence sont définis comme faisant partie de ladite première région colorée (5) .

11. Procédé selon la revendication 10, dans lequel ladite détection de profondeur d'image (15) est une détection de profondeur passive (15A) basée sur la comparaison de multiples parties d'image en lumière visible (2) de la même scène (1) prises soit sous forme de séquence, soit simultanément en utilisant plusieurs caméras.

12. Système informatique (20) comprenant
une caméra à lumière visible (25) configurée pour obtenir une image en lumière visible d'une scène (1) ;
une caméra infrarouge (26) configurée pour obtenir une image infrarouge de ladite même scène (1) ; et
un processeur (28) couplé à un dispositif de stockage (29) et configuré pour extraire une partie d'image en lumière visible (2) de ladite image en lumière visible et pour extraire une partie d'image infrarouge (3) de ladite image infrarouge ; dans lequel
ledit dispositif de stockage (29) est configuré pour stocker des instructions qui, lorsqu'elles sont exécutées par ledit processeur (28), amènent le système informatique (20) à exécuter un procédé selon l'une quelconque des revendications 1 à 11.

13. Système informatique (20) selon la revendication 12, dans lequel ledit système informatique (20) est un smartphone mobile (30) comprenant un système à double caméra (27), ledit système à double caméra (27) comprenant ladite caméra à lumière visible (25) et ladite caméra infrarouge (26) côte à côte et disposées avec la même orientation.
